Europäisches Patentamt

European Patent Office

Office européen des brevets

(19)

(11) Veröffentlichungsnummer: **0 347 668 B1**

(12) **EUROPÄISCHE PATENTSCHRIFT**

(45) Veröffentlichungstag der Patentschrift: **10.03.93**

(51) Int. Cl.⁵: **B22F 9/18**, C22B 34/24, C22B 5/04, C22B 34/20

(21) Anmeldenummer: **89110461.4**

(22) Anmeldetag: **09.06.89**

(54) **Feinkörnige hochreine Erdsäuremetallpulver, Verfahren zu ihrer Herstellung sowie deren Verwendung.**

(30) Priorität: **22.06.88 DE 3820960**

(43) Veröffentlichungstag der Anmeldung:
**27.12.89 Patentblatt 89/52**

(45) Bekanntmachung des Hinweises auf die
Patenterteilung:
**10.03.93 Patentblatt 93/10**

(84) Benannte Vertragsstaaten:
**BE DE ES FR GB IT**

(56) Entgegenhaltungen:
**DE-A- 2 517 180      DE-A- 3 330 455
DE-A- 3 706 853      US-A- 3 232 752
US-A- 4 067 736      US-A- 4 740 238**

(73) Patentinhaber: **H.C. Starck GmbH & Co. KG
Im Schleeke 78-91
W-3380 Goslar(DE)**

(72) Erfinder: **Behrens, Dieter
Hopfenring 7
W-3388 Bad Harzburg 1(DE)**

(74) Vertreter: **Steiling, Lothar, Dr. et al
c/o Bayer AG Konzernverwaltung RP Patente
Konzern
W-5090 Leverkusen 1 Bayerwerk (DE)**

EP 0 347 668 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3. 10/3.5x/3.0. 1)

**Beschreibung**

Die vorliegende Erfindung betrifft aus Agglomeraten bestehende Erdsäuremetallpulver für pulvermetallurgische Anwendungen zur Herstellung von Sinterkörpern, Verfahren zu ihrer Herstellung sowie daraus herstellbare Sinteranoden sowie deren Verwendung.

Gemäß der DE-A 37 06 853, nach der u.a. Kaliumheptafluorotantalat bei einer Temperatur oberhalb 600°C in eine Inertsalzschmelze eingetragen wird, gewinnt man Erdsäuremetalle metallothermisch aus komplexen Halogeniden der Erdsäuremetalle durch Reduktion mit Alkali- oder Erdalkalimetallen, und zwar bei solchen Temperaturen, bei denen die an der Reaktion beteiligten Salze in schmelzflüssiger Form vorliegen.

Die exotherme Reduktionsreaktion führt nach den Angaben in der DE-A 37 06 853 zu einer Erwärmung der Reaktionsmischung auf über 700°C. Die Reaktion wird danach noch 4,5 Stunden bei 850°C gehalten, wobei die Salzschmelze zusammen mit dem Tantal-Sediment gerührt wird.

In einem besonderen Beispiel dieser Patentschrift wird die Zugabe von Alkalimetall und Tantalsalz auf mehrere Einzelschritte verteilt und die Endtemperatur auf 730°C gehalten.

Generell wird bei diesem Verfahren kontinuierlich oder schrittweise das Tantalsalz und das Reduktionsmetall in Teilmengen in den Reaktor eingetragen, um die Temperaturbedingungen bei der exothermen Reaktion der Komponenten zu kontrollieren und zu steuern.

Den bekannten Verfahren des Standes der Technik ist gemeinsam, daß man generell von einer Salzschmelze ausgeht, die zur Kontrolle der stark exothermen Reaktion meist noch inerte Verdünnungssalze enthält und in der das Tantalsalz (Kaliumheptafluorotantalat) in jedem Falle in schmelzflüssiger Form vorliegt, bevor das Reduktionsmetall zugeführt wird.

Die Reaktionstemperaturen liegen in allen Fällen mindestens oberhalb 600°C und die gerührte Salzschmelze wird immer für eine gewisse Zeit bei erhöhter Temperatur gehalten, um die vollständige Umsetzung der Reaktanden zu gewährleisten. Es wird allerdings auch gefordert, die Höchsttemperatur der Reaktionsmasse möglichst niedrig zu halten, die resultierenden Endprodukte bestehen jedoch nach dem Erkalten der Salzschmelzen immer aus kompakt-stückigem Material in Form von festen Alkalisalzbrocken, in denen die Metallpulver ungleichmäßig verteilt sind und die immer durch Brechen und Mahlen zerkleinert werden müssen, bevor sie dem Auswaschprozeß zugeführt werden.

Die nach dem Stand der Technik bekannten Verfahren zur Herstellung der Ventilmetallpulver weisen daher vielerlei Nachteile auf, von denen im Zusammenhang mit der Aufgabe der Erfindung folgende von besonderer Bedeutung sind:

Das Aufschmelzen der Komponenten (Inertsalze und Erdsäuremetallkomplexsalze) erfordert Temperaturen, welche ihrerseits warmfeste und korrosionsfeste Reaktorwerkstoffe notwendig machen. Das Rühren der Schmelze führt naturgemäß zum Abrieb des Tiegelwandmaterials und zu Kontakten des entstehenden Tantalpulvers mit der Reaktorwand, woraus schädliche metallische Verunreinigungen des Produktes aus dem Tiegelmaterial resultieren. Außerdem verdichten sich in einer gerührten Salzschmelze die Metallpulver-Partikel durch thermische und mechanische Einflüsse (Schmiede-Effekte) und erleiden dadurch unerwünschte Oberflächenverluste.

Verfahren nach dem Stand der Technik, bei denen die Salzschmelze nicht mechanisch bewegt wird, leiden unter dem Mangel einer unvollständigen Umsetzung der Reaktionspartner und erfordern einen hohen Überschuß an Reduktionsmitteln oder entsprechend lange Verweilzeiten im Hochtemperaturbereich.

Extrem reine Erdsäuremetallpulver erfordern deshalb bei ihrer Herstellung einen hohen operativen Aufwand, z.B. durch Verwendung von Inlets aus arteigenen Blechen im Innern des Reaktors. Diese haben jedoch nur begrenzte Standzeiten und sind darüber hinaus sehr teuer.

Die ebenfalls bekannten "Pasten-Verfahren", z.B. gemäß DE-C 25 17 180, bei denen die Reaktanden in pastenförmiger Mischung durch Initialzündung zur Reaktion gebracht und ohne Rühren eine Zeitlang auf höherer Temperatur gehalten werden müssen, führen beim Zünden zur spontanen Überhitzung der Reaktionsmischung, womit das Schmelzen der beteiligten Salze einhergeht. Eine Kontrolle der Reaktionskinetik ist dabei nicht möglich. Wie bereits oben erwähnt, führen auch hierbei die langen Verweilzeiten des Rohpulvers in der heißen Salzschmelze zu grobkörnigen Tantalpulvern, deren Durchschnitts-Korngrößen, nach der Luft-Durchdringungsmethode gemessen (FISHER-SUB-SIEVE-SIZER (FSSS), -ASTM-Norm B 330/82) in allen Fällen Werte von 1 Mikrometer übersteigen.

Es war daher die Aufgabe der Erfindung, hochreine Erdsäuremetallpulver mit geringerer Durchschnittskorngröße zur Verfügung zu stellen, welche die Nachteile der nach den bekannten Verfahren hergestellten Metallpulver für Kondensator-Anwendungen nicht aufweisen.

Es wurden nun gefunden, daß diese Forderungen in hervorragender Weise erfüllt werden durch aus Agglomeraten bestehende Erdsäuremetallpulver, welche dadurch gekennzeichnet sind, daß die durchschnittliche Korngröße der Agglomerate nicht mehr als 2,0 $\mu$m, bevorzugt nicht mehr als 1,7 $\mu$m, beträgt und die Agglomerate aus primären Einzelkörpern bestehen, deren durchschnittliche Korngröße nicht mehr als 0,7 $\mu$m beträgt. (Bestimmt nach FISHER-SUB-SIEVE-SIZER).

Diese Erdsäuremetallpulver sind Gegenstand dieser Erfindung.

Sie sind gekennzeichnet durch besondere Eigenschaften bezüglich der chemischen Reinheit, geringer Partikelgröße, großer spezifischer Oberfläche und sehr gutem Fließverhalten bei der pulvermatallurgischen Verarbeitung.

In einer bevorzugten Ausführungsform passieren 100 % der Agglomerate ein Sieb einer Maschenweite von 250 $\mu$m.

Die erfindungsgemäßen Erdsäuremetallpulver weisen bevorzugt einen Gesamt-Alkaligehalt von maximal 30 ppm auf wobei der Kaliumwert 10 ppm nicht übersteigt. Weiterhin weisen sie bevorzugt einen Gesamt-Gehalt an Eisen, Chrom und Nickel von maximal 30 ppm auf, wobei Chrom und Nickel jeweils 5 ppm nicht übersteigen. Besonders bevorzugt ist das Erdsäuremetall Tantal,

Die spezifische Oberfläche des Primär-Tantalpulvers, nach der BET-Methode gemessen, beträgt besonders bevorzugt mindestens 1,5 m$^2$/g.

Aus dem erfindungsgemäßen Tantalmetall hergestellte Sinteranoden sind dadurch gekennzeichnet, daß diese, bei 1.500°C 20 Minuten gesintert, eine spezifische elektrische Ladung von mehr als 25 Millicoulomb pro Gramm und eine volumenbezogene Ladung von mindestens 120 Millicoulomb pro Kubikzentimeter aufweisen.

Es wurde gefunden, daß man die erfindungsgemäßen Erdsäuremetallpulver mit Hilfe der bekannten und üblichen alkalimetallothermischen Reduktionsverfahren aus Erdsäuremetallsalzen in der Weise erhalten kann, daß man die Reaktionstemperatur bei der exothermen Reaktion der Erdsäuresalze mit dem Reduktionsmetall so hält, daß innerhalb der Reaktionscharge keine geschmolzenen Phasen der an der Reaktion beteiligten Salze auftreten.

Gegenstand der Erfindung ist somit auch ein Verfahren zur Herstellung der erfindungsgemäßen Erdsäuremetallpulver mittels Umsetzung von Alkali-Erdsäure-Doppelhalogeniden und/oder Erdsäurehalogeniden mit Alkalimetall gegebenenfalls unter Zusatz von Inertsalzen in Form von Alkalihalogeniden, welches dadurch gekennzeichnet ist, daß die Umsetzung so durchgeführt wird, daß die Reaktionsmischung nicht als Schmelze vorliegt, wobei die Umsetzung bei Temperaturen unterhalb 600°C, bevorzugt zwischen 400 und 600°C, durchgeführt wird.

Besonders gute Ergebnisse werden dabei erreicht, wenn die Alkali-Erdsäure-Doppelhalogenide Alkaliheptafluorotantalate oder Alkaliheptafluoroniobate sind und als Reduktionsmetalle flüssige Alkalimetalle eingesetzt werden.

Vorzugsweise wird bei der Reduktion von Erdsäuremetallsalzen mit flüssigem Alkalimetall die ungeschmolzene Reaktionsmasse gerührt, um eine gleichmäßige und vollständige Umsetzung der Reaktionspartner zu gewährleisten.

Besonders bevorzugt ist beim erfindungsgemäßen Verfahren das Tantalsalz Kaliumheptofluorotantantalat und das Reduktionsmetall flüssiges Natrium. Ebenso ist es aber auch vorteilhaft möglich, als Tantalsalz Natriumheptafluorotantalat einzusetzen.

Man vermeidet eine direkte mechanische Einwirkung beim Rühren auf die primären Metallpartikel dadurch, daß diese im Verlaufe ihrer Entstehung in festes Alkalihalogenid eingebettet sind und damit von einer festen schützenden Alkalisalz-Hülle umgeben sind. Die abgekühlte Reaktionsmasse ist überraschenderweise auch von einer brüchig-spröden, körnigen und rieselfähigen Konsistenz, die es erlaubt, dieselbe als Schüttgut in den üblichen Waschprozeß einzubringen.

Nach dem Auswaschen der Rohprodukte zwecks Entfernung der begleitenden Alkalihalogenide mittels üblicher und bekannter Methoden erhält man sehr feine und extrem oberflächenreiche Erdsäuremetallpulver. Am Schluß der Waschprozedur wird das rohe Metallpulver noch einer oxidierenden Säurebehandlung unterzogen, um eventuelle wasserunlösliche Verunreinigungen zu eluieren. Das aus dem Laugungsprozeß gewonnene Metallpulver kann anschließend einer schonenden thermischen Nachbehandlung, z.B. einer desoxidierenden Agglomerierung (z. B. gemäß DE-C 31 30 392) unterzogen werden.

Das nach dem Waschprozeß anfallende Erdsäuremetallpulver weist Durchschnitts-Korngrößen (nach FSSS) von weniger als 0,7 Mikrometer auf.

Die Anwendung der erfindungsgemäßen feinen und hochreinen Erdsäuremetallpulver bietet Vorteile überall dort, wo die Anforderungen durch die heute verfügbaren Erdsäuremetallpulver bisher nicht erfüllt wurden:

Pulvermetallurgisch hergestellte feindisperse Verbundwerkstoffe und Pseudolegierungen erfordern sehr feine und saubere Ausgangsstoffe. Erwähnt seien hier Niobhaltige Supraleiter der metallischen Art.

3

EP 0 347 668 B1

Für die Herstellung von Targets zur Oberflächenbedampfung von mikroelektronischen Komponenten werden höchste Anforderungen an die Reinheit gestellt, wofür sich die erfindungsgemäßen Erdsäuremetallpulver anbieten.

Aber auch für die schmelz- oder sintermetallurgische Herstellung von Halbzeug wie Drähte, Bleche und Folien werden hochreine und feine Erdsäuremetallpulver benötigt.

Im Vordergrund stehen allerdings die speziellen Anwendungsmöglichkeiten zur Herstellung von Elektrolyt-Kondensatoren, insbesondere Tantalkondensatoren.

Gegenstand der Erfindung ist somit auch die Verwendung der erfindungsgemäßen Erdsäuremetallpulver für die Herstellung von Elektrolyt-Kondensatoren.

Im folgenden wird die Erfindung beispielhaft beschrieben. Die getroffene Auswahl soll jedoch nicht als Einschränkung der weiteren Verfahrens-Möglichkeiten verstanden werden.

Beispiel 1

In einem Extruder-Micher der in der genannten DE-C 2 517 180 (Beispiel 1) verwendeten Art wurden unter Schutzgas nahezu stöchiometrische Mengen - mit 2 % Überschuß an Reduktionsmetall -aktiviertes (dekrepitiertes) $K_2TaF_7$ und Natriummetall gemischt und in Portionen von jeweils 1 kg auf Schiffchen dosiert, die unter Schutzgas auf einem umlaufenden Transportband langsam in eine elektrisch beheizte Heizzone gefahren wurden. Die Heizzone wurde auf ein ansteigendes Temperaturprofil eingeregelt, das beginnend mit 300°C auf 500°C anstieg. Beim langsamen Durchfahren der Heizzone kam es zur langsamen Umsetzung der Reaktanden, ohne daß die Reaktionsmasse in den schmelzflüssigen Zustand gelangte. Eine Infrarotsensor-Messung ergab eine Oberflächentemperatur der Reaktionsmasse von ca. 580°C als Maximalwert. Nach dem Durchlaufen der Kühlzone des Umlaufofens erhielt man einen schwammartiges Konglomerat von Alkalisalz und Tantalmetall, das durch Zerdrücken leicht in eine schüttbare Konsistenz gebracht werden konnte. Das salzhaltige Rohprodukt wurde mit Wasser mehrfach gewaschen und nach Abnahme der Leitfähigkeit des Waschwassers mit verdünnter Schwefelsäure und etwas Wasserstoffperoxid nachgereinigt.

Beispiel 2

Der Versuch gemäß Beispiel 1 wurde mit Zusatz von 25 % der Menge des $K_2TaF_7$ an Inertsalz (NaCl) wiederholt, was etwa den Ausgangsbedingungen des Beispiels 1 der DE-C 25 17 180 entspricht. Es zeigte sich, daß sich der Einfluß des Inertsalzes auf den kinetischen Ablauf des Reduktionsprozesses in der Weise auswirkte, daß die gemessene Oberflächentemperatur der Reaktionsmase nach Einsetzen der Reaktion nur auf maximal 530°C anstieg. Insofern hat das Inertsalz eine reaktionsverzögernde Wirkung, was der Lösung der erfindungsgemäßen Aufgabe zugute kommt. Das rohe Reaktionsprodukt war von ähnlicher Beschaffenheit wie das des Beispiels 1. Es wurde in analoger Weise weiterverarbeitet.

Beispiel 3

In einen mit Außenheizung versehenen zylindrischen Reaktionsbehälter aus Edelstahl mit hermetisch verschließbarem Deckel, der Durchführungen für die Rührvorrichtung und zum Einbringen von Reduktionsmetall, Tantalsalz und für eine Schutzgasspülung trägt, wurden 377 g Natriummetall in geschmolzener Form eingebracht und unter Schutzgas (Argon) auf 350°C aufgeheizt. Unter Rühren wurden kontinuierlich 1253 g $K_2TaF_7$ in die Metallschmelze eingeschleust und zwar in der Weise, daß die maximale Reaktionstemperatur von 500°C im Innern der Retorte nicht überschritten wurde. Nach Beendigung der Zugabe des Tantalsalzes wurde noch eine Nachreaktion über einen Zeitraum von 30 Minuten eingehalten, um die Umsetzung des Alkalimetalls zu vervollständigen. Nach dem Abkühlen des Tiegels auf Raumtemperatur wurde das körnige und rieselfähige Produkt in schwach schwefelsaures Wasser eingetragen und danach mit destilliertem Wasser neutral gewaschen. Das feuchte Metallpulver wurde schließlich bei 110°C im Vakuumtrockenschrank getrocknet.

Beispiel 4

Die in Beispiel 3 verwendete Retorte konnte zur Versuchsdurchführung nach diesem ebenfalls bekannten Verfahren verwendet werden, wobei jetzt die Temperaturbegrenzung der Reduktionsreaktion für Spitzentemperaturen auf maximal 600°C gehalten wurde. Es wurden 1500 g dekrepitiertes $K_2TaF_7$ (vgl. Beispiel 1) und 750 g NaCl in der Retorte vorgelegt und unter einem schwachen Argonstrom wurde die Mischung unter

4

Rühren langsam auf 400°C aufgeheizt. In kleinen (undefinierten) Portionen wurde aus einer Vorlage flüssiges Natrium in die Retorte dosiert, wobei darauf geachtet wurde, daß die Retorte sich jeweils nur um maximal 100°C erhitzte, so daß ca. 500°C nicht überschritten wurden. Bei heruntergefahrenem Heizmantel wurde die Retorte gelegentlich mit einem Kaltluftgebläse gekühlt.

Nach dem Einbringen von 450 g flüssigem Natrium wurde die Reaktion bei 500°C unter 20-minütigem Rühren zu Ende gebracht und die Charge abgekühlt. Das rieselfähige Produkt wurde ohne mechanische Hilfe aus der Retorte geschüttet und dem zuvor beschriebenen Waschprozeß unterworfen.

Beispiel 5

Der Versuch gemäß Beispiel 1 wurde mit $Na_2TaF_7$ und 25 % des $Na_2TaF_7$-Menge an Intertsalz (NaCl) durchgeführt, was den Ausgangsbedingungen des Beisipels 1 der DE-C 2 517 180 entspricht.

Wie im Beispiel 2 wirkt sich der Einfluß des Inertsalzes auf den kinetischen Ablauf des Reduktionsprozesses aus. In diesem Fall wurde eine Oberfächentemperatur der Reaktionsmasse nach Reaktionsbeginn von maximal 550°C erzielt.

Wie im Beispiel 2 hat das Inertsalz auch hier eine die Reaktionstemperatur senkende Wirkung. Das rohe Reaktionsprodukt war von etwa festerer Struktur als im Beispiel 2. Es wurde in analoger Weise weiterverarbeitet.

Vergleichsprobe

Als Vergleichsprobe dient im Folgenden ein Tantalmetallpulver für Kondensator-Anwendungen nach dem Stand der Technik, wie es derzeit als höchstkapazitives Ta-Pulver PL-22000 der Anmelderin marktüblich ist.

## Material-Eigenschaften der Endprodukte

### Tabelle 1

Untersuchungsergebnisse der unbehandelten Versuchsprodukte (Primär-Produkt)

| Produkt | Beisp. Nr. 1 | Beisp. Nr. 2 | Beisp. Nr. 3 | Beisp. Nr. 4 | Beisp. Nr. 5 |
|---|---|---|---|---|---|
| Durchschnittskorngröße (FSSS) (Mikrometer) | 0,7 | 0,5 | 0,3 | 0,4 | 0,6 |
| Schüttdichte (Scott) ($g/cm^3$ ($g/inch^3$)) | 0,824 (13,5) | 0,708 (11,6) | 0,616 (10,1) | 0,659 (10,8) | 0,738 (12,1) |
| BET-Oberfläche ($m^2/g$) | 1,75 | 2,20 | 3,50 | 2,75 | 1,85 |

## Tabelle 2

Untersuchung der bei 800°C unter Schutzgas und Zusatz von Magnesium getemperten Roh-Pulver (Desoxidierte Agglomerate)

| Produkt | Beisp. Nr. 1 | Beisp. Nr. 2 | Beisp. Nr. 3 | Beisp. Nr. 4 | Beisp. Nr. 5 | Vergl.- Probe |
|---|---|---|---|---|---|---|
| Durchschnitts-korngröße (FSSS) (Mikrometer) | 1,6 | 1,3 | 1,0 | 1,2 | 1,5 | 1,2 |
| Schüttdichte (Scott) $(g/cm^3(g/inch^3))$ | 1,269 (20,8) | 1,135 (18,6) | 1,098 (18,0) | 1,172 (19,2) | 1,208 (19,8) | 1,251 (30,6) |
| BET-Oberfläche $(m^2/g)$ | 0,75 | 0,83 | 1,05 | 0,96 | 0,78 | 0,65 |
| Fließverhalten*) | (+) | (+) | (+) | (+) | (+) | (-) |

*) Das Fließverhalten wird nach ASTM B213-77 gemessen, wobei man die Probemenge von 50 g Tantalpulver durch einen konischen Metalltrichter mit definierten Austrittsöffnungen ausfließen läßt. Der Meßwert wird in sec. Auslaufzeit angegeben. Im vorliegenden Fall wurde das Fließverhalten danach beurteilt, ob die Probe ohne Störung durch eine Öffnung von 0,1 inch frei hindurchfließt.
(+) = freifließend; (-) = nicht fließend

EP 0 347 668 B1

## Tabelle 3

### Chemische Analysen

| Produkt | | Beisp. Nr. 1 | Beisp. Nr. 2 | Beisp. Nr. 3 | Beisp. Nr. 4 | Beisp. Nr. 5 | Vergl.- Probe |
|---|---|---|---|---|---|---|---|
| Sauerst. | (%) | 0,19 | 0,22 | 0,25 | 0,24 | 0,20 | 0,25 |
| Stickst. | (%) | <0,01 | <0,01 | <0,01 | <0,01 | <0,01 | <0,01 |
| Wasserst. | (ppm) | <50 | <50 | <50 | <50 | <50 | <50 |
| Kohlenst. | (ppm) | 30 | 36 | 41 | 33 | 35 | 70 |
| Kalium | (ppm) | 3 | 5 | 7 | 6 | < 3 | 210 |
| Natrium | (ppm) | 18 | 21 | 18 | 22 | 25 | 125 |
| Eisen | (ppm) | < 5 | 8 | 12 | 13 | < 5 | 40 |
| Chrom | (ppm) | < 3 | < 3 | < 3 | < 3 | < 3 | < 3 |
| Nickel | (ppm) | < 3 | < 3 | < 3 | < 3 | < 3 | < 3 |
| Magnesium | (ppm) | < 5 | < 5 | < 5 | < 5 | < 5 | 50 |

EP 0 347 668 B1

**Tabelle 4**

| Produkt | Beisp. Nr. 1 | Beisp. Nr. 2 | Beisp. Nr. 3 | Beisp. Nr. 4 | Beisp. Nr. 5 | Verg.-Probe |
|---|---|---|---|---|---|---|
| Sinterdichte (g/cm³) | 5,3 | 5,4 | 5,5 | 5,3 | 5,3 | 5,1 |
| **Kapazitätsausbeuten:** | | | | | | |
| Spezifische Ladung (mC/g) | 25,5 | 28,5 | 30,0 | 28,5 | 26,0 | 22,5 |
| Vol.-spezif. Ladung (mC/cm³) | 135 | 154 | 165 | 151 | 138 | 115 |
| Spezif. Leck-strom (µA/g) | 2,1 | 2,8 | 3,6 | 2,8 | 2,3 | 5,1 |
| relat. Leck-strom (nA/µC) | 0,08 | 0,1 | 0,12 | 0,1 | 0,090 | 0,22 |
| Durchschlags-spannung (Volt) | 150 | 130 | 130 | 130 | 145 | 120 |

**Ergebnisse der elektrischen Tests**

**Parameter:** Pressdichte:     5,0 g/cm³

Anodengewicht:  0,2 g

Sinterung:      1500° C, 20 Minuten

Formierung:     70 Volt, 70 mA/g bei 60° C

9

EP 0 347 668 B1

**Patentansprüche**

1. Aus Agglomeraten bestehende Erdsäuremetallpulver für pulvermetallurgische Anwendungen zur Herstellung von Sinterkörpern, dadurch gekennzeichnet, daß die durchschnittliche Korngröße der Agglomerate nicht mehr als 2,0 μm (FSSS), bevorzugt nicht mehr als 1,7 μm (FSSS), beträgt und die Agglomerate aus primären Einzelkörnern bestehen, deren durchschnittliche Korngröße nicht mehr als 0,7 μm (FSSS) beträgt.

2. Erdsäuremetallpulver, gemäß Anspruch 1, dadurch gekennzeichnet, daß die Agglomerate zu 100 % ein Siebe einer Maschenweite von 250 μm passieren.

3. Erdsäuremetallpulver, gemäß einem der Ansprüche 1 oder 2, dadurch gekennzeichnet, daß sie einen Gesamt-Alkaligehalt von maximal 30 ppm aufweisen, wobei der Kaliumwert 10 ppm nicht übersteigt.

4. Erdsäuremetallpulver gemäß einem oder mehreren der Ansprüche 1 bis 3, dadurch gekennzeichnet, daß sie einen Gesamt-Gehalt an Eisen, Chrom und Nickel von maximal 30 ppm aufweisen, wobei Chrom und Nickel jeweils 5 ppm nicht übersteigen.

5. Erdsäuremetallpulver gemäß einem oder mehreren der Ansprüche 1 bis 4, dadurch gekennzeichnet, daß das Erdsäuremetall Tantal ist.

6. Erdsäuremetall gemäß Anspruch 5, dadurch gekennzeichnet daß die spezifische Oberfläche des Primär-Tantalpulvers, nach der BET-Methode gemessen, mindestens 1,5 Quadratmeter pro Gramm beträgt.

7. Aus Tantalmetall gemäß Anspruch 5 hergestellte Sinteranoden, dadurch gekennzeichnet, daß diese bei 1500°C 20 Minuten gesintert, eine spezifische elektrische Ladung von mehr als 25 Millicoulomb pro Gramm und eine volumenbezogene Ladung von mindestens 120 Millicoulomb pro Kubikzentimeter aufweisen.

8. Verfahren zur Herstellung der Erdsäuremetallpulver gemäß einem oder mehreren der Ansprüche 1 bis 7, mittels Umsetzung von Alkali-Erdsäure-Doppelhalogeniden und/oder Erdsäurehalogeniden mit Alkalimetall gegebenenfalls unter Zusatz von Inertsalzen in Form von Alkalihalogeniden, dadurch gekennzeichnet, daß die Umsetzung so durchgeführt wird, daß die Alkali-Erdsäure-Doppelhalogenide und/oder Erdsäurehalogenide vor ihrer Umsetzung als Feststoffe in der Reaktionsmischung vorliegen, wobei die Umsetzung bei Temperaturen unterhalb 600°C, bevorzugt zwischen 400 und 600°C durchgeführt wird.

9. Verfahren gemäß Anspruch 8, dadurch gekennzeichnet, daß die Alkali-Erdsäure-Doppelhalogenide Alkaliheptafluorotantalate oder Alkaliheptafluoroniobate sind und als Reduktionsmetalle flüssige Alkalimetalle eingesetzt werden.

10. Verfahren gemäß einem oder mehreren der Ansprüche 7 bis 9, dadurch gekennzeichnet, daß das Tantalsalz Kaliumheptafluorotantalat und das Reduktionsmetall flüssige Natrium ist.

11. Verfahren gemäß einem oder mehreren der Ansprüche 7 bis 9, dadurch gekennzeichnet, daß das Tantalsalz Natriumheptafluorotantalat und das Reduktionsmittel flüssiges Natrium ist.

12. Verwendung der Erdsäuremetallpulver gemäß einem oder mehreren der Ansprüche 1 bis 11 für die Herstellung von Elektrolyt-Kondensatoren.

**Claims**

1. Transition metal powders for powder metallurgical applications which consist of agglomerates for the preparation of sinter compacts, characterised in that the average particle size of the agglomerates is not more than 2.0 μm (FSSS), preferably not more that 1.7 μm (FSSS) and the agglomerates consist of primary individual particles whose average particle size is not more than 0.7 μm (FSSS).

10

2. A transition metal powder according to Claim 1, characterised in that the agglomerates pass 100% through a sieve with a mesh size of 250 $\mu$m.

3. A transition metal powder according to one of Claims 1 or 2, characterised in that it has a total alkali metal content of at most 30 ppm, the potassium value not exceeding 10 ppm.

4. A transition metal powder according to one or more of Claims 1 to 3, characterised in that it has a total iron, chromium and nickel content of at most 30 ppm, the chromium and nickel contents each not exceeding 5 ppm.

5. A transition metal powder according to one or more of Claims 1 to 4, characterised in that the transition metal is tantalum.

6. A transition metal powder according to Claim 5, characterised in that the specific surface area of the primary tantalum powder, measured by the BET method, is at least 1.5 square metres per gram.

7. Porous anodes prepared from tantalum metal in accordance with Claim 5, characterised in that the porous anodes when sintered for 20 minutes at 1500°C, have a specific electric charge of more than 25 millicoulombs per gram and a volume-specific charge of at least 120 millicoulombs per cubic centimetre.

8. A process for the preparation of the transition metal powders according to one or more of Claims 1 to 7, using the reaction of alkali metal/transition metal double halides and/or transition metal halides with an alkali metal, optionally with the addition of inert salts in the form of alkali metal halides, characterised in that the reaction is performed in such a way that the alkali metal/transition metal double halide and/or transition metal halide is present as a solid in the reaction mixture before its reaction, the reaction being performed at temperatures below 600°C, preferably between 400 and 600°C.

9. A process according to Claim 8, characterised in that the alkali metal/transition metal double halides are alkali metal heptafluorotantalates or alkali metal heptafluoroniobates and liquid alkali metals are used as the reducing metals.

10. A process according to one or more of Claims 7 to 9, characterised in that the tantalum salt is potassium heptafluorotantalate and the reducing metal is liquid sodium.

11. A process according to one or more of Claims 7 to 9, characterised in that the tantalum salt is sodium heptafluorotantalate and the reducing metal is liquid sodium.

12. Use of the transition metal powders according to one or more of Claims 1 to 11 for the preparation of electrolytic capacitors.

**Revendications**

1. Poudres de métaux acido-terreux composées d'agglomérés, destinées à être utilisées en métallurgie des poudres pour fabriquer des produits frittés, caractérisées en ce que la granulométrie moyenne des agglomérés n'est pas supérieure à 2,0 $\mu$m (FSSS), de préférence pas supérieure à 1,7 $\mu$m (FSSS), et en ce que les agglomérés se composent de grains individuels primaires, dont la granulométrie moyenne n'est pas supérieure à 0,7 $\mu$m (FSSS).

2. Poudres de métaux acido-terreux suivant la revendication 1, caractérisées en ce que les agglomérés passent à 100 % à travers un tamis d'une ouverture de mailles de 250 $\mu$m.

3. Poudres de métaux acido-terreux suivant l'une des revendications 1 ou 2, caractérisées en ce qu'elles présentent une teneur totale en alcalins de 30 ppm maximum, la teneur en potassium n'étant pas supérieure à 10 ppm.

4. Poudres de métaux acido-terreux suivant l'une ou plusieurs des revendications 1 à 3, caractérisées en ce qu'elles présentent une teneur totale en fer, chrome et nickel de 30 ppm maximum, le chrome et le nickel ne dépassant pas, respectivement, 5 ppm.

5. Poudres de métaux acido-terreux suivant l'une ou plusieurs des revendications 1 à 4, caractérisées en ce que le métal acido-terreux est le tantale.

6. Métal acido-terreux suivant la revendication 5, caractérisé en ce que la surface spécifique de la poudre de tantale primaire, mesurée selon le procédé BET, est d'au moins 1,5 mètre carré par gramme.

7. Anodes frittées fabriquées au départ du tantale suivant la revendication 5, caractérisées en ce qu'elles sont soumises à un frittage à 1500 °C pendant 20 minutes, ont une charge électrique supérieure à 25 millicoulombs par gramme et une charge volumique d'au moins 120 millicoulombs par centimètre cube.

8. Procédé de préparation de poudres de métaux acido-terreux suivant l'une ou plusieurs des revendications 1 à 7, par la réaction d'halogénures doubles alcalins/acido-terreux et/ou d'halogénures acido-terreux avec un métal alcalin, éventuellement avec un apport de sels inertes sous forme d'halogénures alcalins, caractérisé en ce que la réaction est conduite de manière que les halogénures doubles alcalins/acido-terreux et/ou les halogénures acido-terreux se présentent à l'état solide dans le mélange réactionnel avant la réaction, la réaction étant conduite à des températures inférieures à 600 °C, et situées de préférence entre 400 et 600 °C.

9. Procédé suivant la revendication 8, caractérisé en ce que les halogénures doubles alcalins/acido-terreux sont des heptafluorotantalates alcalins ou des heptafluoroniobates alcalins, et en ce que des métaux alcalins liquides sont mis en oeuvre comme métaux réducteurs.

10. Procédé suivant l'une ou plusieurs des revendications 7 à 9, caractérisé en ce que le sel de tantale est de l'heptafluorotantalate de potassium et en ce que le métal réducteur est du sodium liquide.

11. Procédé suivant l'une ou plusieurs des revendications 7 à 9, caractérisé en ce que le sel de tantale est de l'heptafluorotantalate de sodium et en ce que le métal réducteur est du sodium liquide.

12. Utilisation des poudres de métaux acido-terreux suivant l'une ou plusieurs des revendications 1 à 11 dans la fabrication de condensateurs d'électrolyse.